# EUROPEAN PATENT APPLICATION

(11) **EP 4 742 324 A1**
(43) Date of publication of application: **13.05.2026**
(21) Application number: 24856705.9
(22) Date of filing: 06.08.2024
(51) Int. Cl.: H01M 4/505, C01G 45/12, H01M 4/525, H01M 4/131, H01M 10/052, H01M 4/02

(54) **POSITIVE ELECTRODE ACTIVE MATERIAL, METHOD FOR PRODUCING SAME, AND POSITIVE ELECTRODE AND LITHIUM SECONDARY BATTERY COMPRISING SAME**

(30) Priority: 22.08.2023 KR 20230109714
(71) Applicant: LG Chem, Ltd., Seoul 07336 (KR)
(72) Inventor: YOON, Ju Han, Daejeon 34122 (KR); JEONG, Myeong Sang, Daejeon 34122 (KR); KIM, Won Tae, Daejeon 34122 (KR); LIM, Young Geun, Daejeon 34122 (KR); LEE, Seong Nam, Daejeon 34122 (KR); SEOL, Jae Seung, Daejeon 34122 (KR)
(74) Representative: Hoffmann Eitle
(86) International application number: PCT/KR2024/011568
(87) International publication number: WO 2025/042092

(57) **Abstract**

The present invention relates to a positive electrode active material that may improve the performance of a lithium secondary battery, and relates to a positive electrode active material comprising a lithium-rich manganese-based oxide comprising a Li₂MnO₃ phase and a LiMO₂ (where M is an element comprising Ni, Mn or a combination thereof) phase at the same time, wherein the lithium-rich manganese-based oxide has a composition represented by Formula 1 described in the present description, a method for preparing the same, and a positive electrode and a lithium secondary battery comprising the same.

## Description

### TECHNICAL FIELD

### Cross-reference to Related Applications

This application claims the benefit of Korean Patent Application No. 10-2023-0109714, filed on August 22, 2023, in the Korean Intellectual Property Office, the contents of which are incorporated herein by reference.

### Technical Field

The present invention relates to a positive electrode active material, a method for preparing the same, and a positive electrode and a lithium secondary battery comprising the same.

### BACKGROUND ART

Lithium secondary batteries are composed of four major components of a positive electrode, a negative electrode, a separator, and an electrolyte. Among them, a positive electrode active material included in the positive electrode plays a major role in determining the capacity, output, and lifespan of the battery. In order for lithium secondary batteries to have high energy density, output, and lifespan, it is essential to improve the performance of the positive electrode active material, and for this reason, much research has been conducted recently to develop high-performance positive electrode active materials.

A lithium-rich oxide (Li-rich layered oxide), a type of a positive electrode active material, is a mixed phase of a Li₂MnO₃ phase and a LiMO₂ (where M is an element including Ni, Mn, Co or a combination thereof) phase, and has the characteristic of providing a very large capacity of 250 mAh/g at high operating voltages (>3.5 V vs. Li/Li⁺). Therefore, the lithium-rich oxide is attracting attention as a high-capacity positive electrode active material.

However, the lithium-rich oxide has problems that occur due to the structural characteristic of having two phases mixed. Specifically, if a battery including the lithium-rich oxide is operated under high voltages, there is a problem in that irreversible capacity loss occurs in the first activation (first formation) process, resulting in reduced efficiency, and during the charge/discharge cycle, voltage fading occurs as a layered structure changes to a spinel structure and then to a rock salt structure, resulting in a problem such as the generation of O₂ gas.

In addition, the increasing price of cobalt raw materials included in the lithium-rich oxide is also emerging as a significant issue. The price of the cobalt raw material is expected to continue to increase, and accordingly, the development of positive electrode active materials with reduced cobalt content is required.

Therefore, it is necessary to secure technology to improve the stability, performance, and economic efficiency of the lithium-rich oxide.

### [Prior Art Document]

### [Patent Document]

(Patent Document 1) Korean Laid-open Patent Publication No. 10-2014-0025102

### DISCLOSURE OF THE INVENTION

### TECHNICAL PROBLEM

The present invention is intended to solve the above problems, and to provide a positive electrode active material, which may improve the capacity characteristics, efficiency characteristics, and output characteristics of a battery and reduce costs, and a method for preparing the same.

In addition, the present invention is intended to provide an economical positive electrode and secondary battery, which has excellent capacity characteristics, efficiency characteristics, and output characteristics by including the positive electrode active material.

### TECHNICAL SOLUTION

(1) The present invention provides a positive electrode active material comprising a lithium-rich manganese-based oxide comprising a Li₂MnO₃ phase and a LiMO₂ (where M is an element comprising Ni, Mn or a combination thereof) phase at the same time, wherein the lithium-rich manganese-based oxide has a composition represented by Formula 1 below.

   [Formula 1] Li₁₊ₓNiₐMn_{b}W_{c}M¹_{d}O₂

   In Formula 1,
   M¹ is one or more selected from Al, P, V, Y, Ti and Nb,
   0.10≤x≤0.20, 0<a<0.5, 0.5≤b<1.0, 0<c<0.008, and 0≤d<0.005.
(2) The present invention provides the positive electrode active material according to (1), wherein a is 0.30 to 0.35.
(3) The present invention provides the positive electrode active material according to (1) or (2), wherein b is 0.55 to 0.60.
(4) The present invention provides the positive electrode active material according to any one of (1) to (3), wherein c is 0.0005 to 0.007.
(5) The present invention provides the positive electrode active material according to any one of (1) to (4), wherein the content of W is 800 ppm to 15,000 ppm on the basis of a total weight of the lithium-rich manganese-based oxide.
(6) The present invention provides the positive electrode active material according to any one of (1) to (5), wherein the lithium-rich manganese-based oxide has a tap density of 1.5 g/cm³ to 2.5 g/cm³.
(7) The present invention provides the positive electrode active material according to any one of (1) to (6), wherein the lithium-rich manganese-based oxide has an average particle diameter (D₅₀) of 2 µm to 12 µm.
(8) The present invention provides a method for preparing the positive electrode active material according to any one of (1) to (7), the method comprising: (A) a step of mixing a composite transition metal hydroxide, a lithium (Li)-containing raw material, and a tungsten (W)-containing raw material to prepare a mixture; and (B) a step of heat-treating the mixture to prepare a lithium-rich manganese-based oxide, wherein the heat-treating is performed under a temperature of 600°C to 1,000°C.
(9) The present invention provides the method for preparing the positive electrode active material according to (8), wherein the tungsten (W)-containing raw material is mixed in an amount of 1,000 ppm to 17,000 ppm on the basis of a total weight of the composite transition metal hydroxide.
(10) The present invention provides the method for preparing the positive electrode active material according to (8) or (9), wherein the heat-treating in step (B) is performed under an air atmosphere.
(11) The present invention provides a positive electrode comprising the positive electrode active material according to any one of (1) to (7).
(12) The present invention provides a lithium secondary battery comprising the positive electrode according to (11).

### ADVANTAGEOUS EFFECTS

The positive electrode active material according to the present invention includes a lithium-rich manganese-based oxide that includes a Li₂MnO₃ phase and a LiMO₂ (where M is an element including Ni, Mn or a combination thereof) phase at the same time, and includes tungsten (W), and the performance of a lithium secondary battery, for example, capacity characteristics, efficiency characteristics and output characteristics may be improved, and there is a cost-saving effect.

In addition, according to the method for preparing a positive electrode active material of the present invention, the positive electrode active material described above may be effectively prepared.

### BRIED DESCRIPTION OF DRAWINGS

FIG. 1 illustrates XRD data of each of the positive electrode active materials prepared in Examples 1 to 5.
FIG. 2 illustrates XRD data of each of the positive electrode active materials prepared in Comparative Examples 1 to 4.
FIG 3 illustrates SEM data of the positive electrode active material prepared in Example 1.

### BEST MODE FOR CARRYING OUT THE INVENTION

Hereinafter, the present invention will be explained in more detail to assist the understanding of the present invention.

Words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the present description, the terms "comprise," "be provided with," or "have" are to be understood as specifying the presence of a feature, number, step, component, or combination thereof implemented, but not excluding in advance the possibility of the presence or addition of one or more other features, numbers, steps, components, or combinations thereof.

In the present description, a tap density may be measured by filling 10 g of a powder into a container of about 20 cm³ using a common tap density meter (for example, GEOPYC-1360 of Micromeritics Co.), applying a pressure of 108 N, measuring the density of particles twice, and then calculating an average of measured values.

In the present description, an average particle diameter (D₅₀) may be defined as a particle diameter of each particle, corresponding to 50% of an accumulated volume on a particle size distribution curve (graph curve of particle size distribution). The average particle diameter may be measured by dispersing a target powder for measurement in a dispersion medium, introducing into a commercially available laser diffraction particle size measuring device (for example, S3500 from Microtrac Co.), measuring a difference in diffraction patterns according to a particle size during the particles pass through a laser beam, calculating particle size distribution, and calculating a particle diameter at a point where 50% of volume cumulative distribution according to particle diameter in the measuring device to measure D₅₀.

In the present description, a primary particle refers to the smallest particle unit recognized when observing a positive electrode active material using a scanning electron microscope (SEM), and a secondary particle refers to a secondary structure formed by agglomerating multiple primary particles.

### Positive Electrode Active Material

Hereinafter, the positive electrode active material according to the present invention will be explained.

The positive electrode active material according to the present invention comprises a lithium-rich manganese-based oxide comprising a Li₂MnO₃ phase and a LiMO₂ (where M is an element comprising Ni, Mn or a combination thereof) phase at the same time, and the lithium-rich manganese-based oxide has a composition represented by Formula 1 below.

[Formula 1] Li₁₊ₓNiₐMn_{b}W_{c}M¹_{d}O₂

In Formula 1,
M¹ is one or more selected from Al, P, V, Y, Ti and Nb,
0.10≤x≤0.20, 0<a<0.5, 0.5≤b<1.0, 0<c<0.008, and 0≤d<0.005.

A lithium-rich oxide (Li-rich layered oxide), a type of a positive electrode active material, is a mixed phase in which a Li₂MnO₃ phase and a LiMO₂ (where M is an element including Ni, Mn, Co or a combination thereof) phase are mixed, and if Co is included, Co acts as an impurity, which reduces the capacity characteristics of a secondary battery including the lithium-rich oxide and has the problem of high manufacturing costs.

The inventors of the present invention have conducted repeated research to solve the problem and, as a result, have found that by doping W in a specific amount without including Co in the lithium-rich oxide, the phenomenon of capacity reduction may be suppressed and the activation of Mn may be increased, thereby improving the capacity characteristics, efficiency characteristics, output characteristics, and economic feasibility of a common lithium-rich manganese-based oxide and completing the present invention.

M¹ is a doping element, and specifically, M¹ may be at least one or more selected from Al, P, V, Y, Ti, and Nb. M¹ is not necessarily included, but if included in an appropriate amount, the particle shape of the positive electrode active material may be improved, and the stability of a crystal structure may be enhanced.

x may be 0.10 or more, 0.11 or more, 0.12 or more, 0.14 or more, 0.145 or more, or 0.150 or more, and may be 0.155 or less, 0.16 or less, 0.18 or less, or 0.20 or less. If x satisfies the above range, a high energy density per unit g may be exhibited, thereby achieving high capacity characteristics.

a may be greater than 0, 0.2 or more, 0.3 or more, 0.305 or more, 0.306 or more, 0.307 or more, or 0.310 or more, and may be 0.313 or less, 0.32 or less, 0.35 or less, 0.4 or less, 0.45 or less, or less than 0.5. If a satisfies the above range, high energy density may be exhibited, so that high capacity characteristics may be achieved. In particular, if a is 0.30 to 0.35, stability and economic feasibility may be improved.

b may be 0.50 or more, 0.52 or more, 0.54 or more, or 0.55 or more, and may be 0.57 or less, 0.60 or less, 0.65 or less, 0.7 or less, 0.8 or less, 0.9 or less, or less than 1. If b satisfies the above range, high energy density may be exhibited, so that high capacity characteristics may be achieved. In particular, if b is 0.55 to 0.60, stability and economic feasibility may be improved.

c may be greater than 0, 0.0005 or more, 0.0009 or more, 0.001 or more, 0.002 or more, or 0.004 or more, and may be 0.006 or less, 0.007 or less, or less than 0.008. If c satisfies the above range, capacity characteristics, efficiency characteristics, and output characteristics may be improved. In particular, if c is 0.0005 to 0.007, the activation degree of Mn may be effectively increased to improve capacity characteristics. On the other hand, if the lithium-rich oxide does not contain W, there is a problem that the capacity characteristics, efficiency characteristics, and output characteristics of a lithium secondary battery including the lithium-rich oxide are deteriorated due to the structural instability of the lithium-rich oxide. If c is 0.008 or more, there is a problem that the capacity characteristics, efficiency characteristics, and output characteristics of a lithium secondary battery including the lithium-rich oxide are deteriorated due to the excessive tungsten (W) acting as an impurity.

d may be 0 or more, 0.001 or more, 0.003 or more, or 0.002 or more, and may be 0.004 or less, or less than 0.005. If d satisfies the above range, the particle shape of the positive electrode active material may be improved and the stability of a crystal structure may be enhanced.

The lithium-rich manganese-based oxide may be one that does not contain cobalt (Co) in the lithium-rich manganese-based oxide. In this case, there is a cost-saving effect, and the performance of a lithium secondary battery may be improved though not containing cobalt.

In Formula 1 above, x, a, b, c, and d may satisfy x+a+b+c+d≥1.

The lithium-rich manganese-based oxide may have a composition represented by Formula 2 below.

[Formula 2] αLi₂Mn_{y1}W_{z1}O₃ · (1-α)Li(Niₓ₂Mn_{y2}W_{z2})O₂

In Formula 2,
0.2≤α≤0.4, y1+z1≤1, 0.4≤x2≤0.6, 0.4≤y2≤0.6, 0.0007≤z1+z2<0.011, and x2+y2+z2≤1.

α refers to the molar ratio of a Li₂MnO₃ phase in the lithium-rich manganese-based oxide, and may be 0.2 or more, 0.25 or more, or 0.27 or more, and may be 0.33 or less, 0.35 or less, or 0.4 or less. If α satisfies the above range, a high energy density per unit g may be exhibited, so that high capacity characteristics may be achieved. In addition, the charge/discharge capacity, initial charge/discharge efficiency, and rate characteristics of a battery including a positive electrode active material may be further improved.

y1 and z1 satisfy y1+z1≤1. If y1 and z1 satisfy the above range, high energy density may be exhibited and high capacity characteristics may be achieved.

x2 may be 0.4 or more, 0.44 or more, or 0.48 or more, and 0.52 or less, 0.56 or less, or 0.6 or less. If x2 satisfies the above range, high energy density may be exhibited and high capacity characteristics may be achieved.

y2 may be 0.4 or more, 0.44 or more, or 0.48 or more, and 0.52 or less, 0.56 or less, or 0.6 or less. If y2 satisfies the above range, high energy density may be exhibited and high capacity characteristics may be achieved.

z1+z2 may be 0.0007 or more, 0.003 or more, or 0.005 or more, and 0.006 or less, 0.008 or less, or less than 0.011. If z1+z2 satisfies the above range, capacity characteristic, efficiency characteristic, and output characteristic may be improved.

x2, y2, and z2 satisfy x2+y2+z2≤1. If x2, y2, and z2 satisfy the above range, capacity characteristic, efficiency characteristic, and output characteristic may be improved.

According to an embodiment of the present invention, the content of W may be 800 ppm or more, 1,000 ppm or more, 2,000 ppm or more, 4,000 ppm or more, 6,000 ppm or more, or 8,700 ppm or more, and may be 12,000 ppm or less, 13,500 ppm or less, or 15,000 ppm or less on the basis of the total weight of the lithium-rich manganese-based oxide. If the content of W is within the above range, the capacity characteristics, efficiency characteristics, and output characteristics of a positive electrode active material may be improved.

According to an embodiment of the present invention, the lithium-rich manganese-based oxide may have a tap density of 1.5 g/cm³ or more, 1.7 g/cm³ or more, 1.9 g/cm³ or more, 2.1 g/cm³ or more, or 2.2 g/cm³ or more, and may have a tap density of 2.3 g/cm³ or less, 2.4 g/cm³ or less, or 2.5 g/cm³ or less. If the tap density is within the above range, the packing density of an electrode increases, so that high capacity characteristics may be achieved and economic feasibility may be improved.

According to an embodiment of the present invention, the lithium-rich manganese-based oxide may have an average particle diameter (D₅₀) of 2 µm or more, 2.5 µm or more, or 3 µm or more, and may be 9 µm or less, 10 µm or less, 11 µm or less, or 12 µm or less. If the average particle size (D₅₀) is within the above range, electrode rolling may be possible without breaking the particles of a positive electrode active material, thereby improving capacity characteristics.

### Method for Preparing Positive Electrode Active Material

Then, a method for preparing a positive electrode active material of the present invention will be explained. The method for preparing a positive electrode active material of the present invention is a method for preparing the positive electrode active material according to the present invention.

The method for preparing the positive electrode active material of the present invention comprises: (A) a step of mixing a composite transition metal hydroxide, a lithium (Li)-containing raw material, and a tungsten (W)-containing raw material to prepare a mixture; and (B) a step of heat-treating the mixture to prepare a lithium-rich manganese-based oxide, wherein the heat-treating performed at a temperature of 600°C to 1,000°C.

According to the present invention described above, the types of raw materials, the mixing ratio of raw materials, the heat treatment temperature, the heat treatment time, or the like may be appropriately adjusted for the preparation.

Hereinafter, each step of the present invention will be explained in particular.

### Step (A)

Step (A) for preparing a mixture by mixing a composite transition metal hydroxide, a lithium (Li)-containing raw material, and a tungsten (W)-containing raw material may be included.

The mixing may be performed by dry mixing or wet mixing. If the components are mixed through dry mixing, a sintering process may be performed without a separate drying process. If the components are mixed through wet mixing, the mixture may be prepared by adding the components to a solvent, specifically water, or a mixture of water and an organic solvent (specifically alcohol, or the like) that may be uniformly mixed with water, or solutions containing the raw materials, specifically aqueous solutions, are prepared and mixed, and then the mixed components are spray dried, and then subjected to a sintering process. The raw materials and the composite transition metal hydroxide may be used in appropriate amounts considering the content of each metal element in a lithium composite transition metal oxide to be finally produced.

The composite transition metal hydroxide may be prepared through a co-precipitation reaction by introducing a composite transition metal aqueous solution, an ammonium cation complex forming agent, and a basic compound into a reactor.

The composite transition metal aqueous solution may be prepared by dissolving a transition metal-containing raw material in a solvent such as water, for example, by dissolving a nickel (Ni)-containing raw material and a manganese (Mn)-containing raw material in water. In addition, if necessary, the transition metal aqueous solution may further include a metal-containing raw material.

The nickel (Ni)-containing raw material may be at least one selected from the group consisting of NiO, Ni(OH)₂, NiO·OH, NiCO₃·2Ni(OH)₂·4H₂O, NiC₂O₄·2H₂O, Ni(NO₃)₂·6H₂O, NiSO₄·6H₂O, fatty acid nickel, and nickel halides, and any one or a mixture of two or more thereof may be used. Specifically, NiSO₄·6H₂O may be used as the nickel-containing raw material in consideration of economic efficiency and ease of a production process.

The manganese (Mn)-containing raw material may be at least one selected from the group consisting of MnCO₃, Mn₂O₃, MnO₂, Mn₃O₄, Mn(NO₃)₂, MnSO₄·H₂O, manganese acetate, manganese dicarboxylate, manganese citrate, manganese salts of manganese fatty acid, oxyhydroxides, and halides of manganese chloride, and any one or a mixture of two or more thereof may be used. Specifically, if considering economic efficiency and ease of a production process as the manganese-containing raw material, MnSO₄·H₂O may be used.

A nickel (Ni)-containing raw material and a manganese (Mn) -containing raw material may be used in appropriate amounts considering the content of each metal element in the composite transition metal hydroxide being produced.

Meanwhile, the ammonium cation complex forming agent may include at least one compound selected from the group consisting of NH₄OH, (NH₄)₂SO₄, NH₄NO₃, NH₄Cl, CH₃COONH₄, and NH₄CO₃, and may be introduced into a reactor in the form of a solution in which the compound is dissolved in a solvent. In this case, as the solvent, water or a mixture of water and an organic solvent (specifically, alcohol or the like) that may be uniformly mixed with water may be used.

The basic compound may be at least one compound selected from the group consisting of NaOH, KOH, and Ca(OH)₂, and may be introduced into a reactor in the form of a solution in which the compound is dissolved in a solvent. In this case, water or a mixture of water and an organic solvent (specifically, alcohol or the like) that may be uniformly mixed with water may be used as the solvent.

As described above, if a composite transition metal aqueous solution, an ammonium cation complex forming agent, and a basic compound are introduced into a reactor, precursor particles in the form of a composite transition metal hydroxide are generated due to the co-precipitation reaction between the transition metal ions in the composite transition metal aqueous solution and the hydroxide ions of the basic compound.

The co-precipitation reaction may be performed for 24 to 80 hours. If the co-precipitation reaction is performed out for a time within the above range, the crystallinity of the precursor particles may be controlled to a sufficient degree.

In this case, the basic compound may be added in an amount such that the pH of the reaction solution becomes a desired range.

If the precursor particles are formed in the above manner, the particles are separated from the reaction solution to obtain a composite transition metal. Specifically, the reaction solution is filtered to separate the particles from the reaction solution, and then the separated particles are washed and dried to obtain a composite transition metal. In this case, processes such as pulverization and/or classification may be performed as needed.

The composite transition metal hydroxide may have a composition represented by NiₚMn_{q}M²ᵣ(OH)₂ (where M² is at least one selected from Al, P, V, Y, Ti, and Nb, and p, q and r satisfy 0<p<0.5, 0.5≤q<1.0, and 0≤r<0.005).

In addition, the composite transition metal hydroxide may not contain cobalt (Co). In this case, there is a cost-saving effect, and the performance of a lithium secondary battery may be improved without containing cobalt in the composite transition metal hydroxide.

The lithium (Li)-containing raw material may be at least one selected from the group consisting of LiOH, Li₂CO₃, LiNO₃, LiNO₂, LiOH·H₂O, LiH, LiF, LiCl, LiBr, LiI, CH₃COOLi, Li₂O, Li acetate, Li dicarboxylate, Li citrate, Li fatty acid, alkyl lithium, and lithium halides, and any one or a mixture of two or more thereof may be used. Specifically, in view of sintering at high temperatures, LiOH may particularly be used.

The tungsten (W)-containing raw material may be at least one selected from the group consisting of WO₃, WC, WS₂ and C₈H₁₆O₈W, and any one or a mixture of two or more thereof may be used. Specifically, WO₃ may be used in consideration of economic feasibility, the amount of gas generated during heat treatment and heat treatment temperature.

According to an embodiment of the present invention, the tungsten (W)-containing raw material may be mixed in an amount of 1,000 ppm or more, 1,500 ppm or more, 5,000 ppm or more, or 10,000 ppm or more, and 15,000 ppm or less, 16,000 ppm or less, or 17,000 ppm or less, on the basis of the total weight of the composite transition metal hydroxide. If the mixing amount of the tungsten (W)-containing raw material is within the above range, the capacity characteristics, efficiency characteristics, and output characteristics of a positive electrode active material may be improved.

According to the present invention, in step (A), a composite transition metal hydroxide containing nickel and manganese but not containing cobalt, a lithium (Li)-containing raw material, and a tungsten (W)-containing raw material may be mixed in amounts to have a composition represented by Formula 1 or Formula 2 above.

### Step (B)

Then, step (B) for producing a lithium-rich manganese-based oxide according to the present invention by heat-treating the mixture may be included.

If the above mixture is heat-treated, the composite transition metal hydroxide, the lithium (Li)-containing raw material, and the tungsten (W)-containing raw material undergo the reaction to produce a lithium-rich manganese-based oxide according to the present invention. Specifically, a lithium-rich manganese-based oxide containing both a Li₂MnO₃ phase and a LiMO₂ (where M is an element including Ni, Mn, or a combination thereof) phase and having a composition represented by Formula 1 below is produced.

[Formula 1] Li₁₊ₓNiₐMn_{b}W_{c}M¹_{d}O₂

In Formula 1,
M¹ is one or more selected from Al, P, V, Y, Ti and Nb,
0.10≤x≤0.20, 0<a<0.5, 0.5≤b<1.0, 0<c<0.008, and 0≤d<0.005.

The heat treatment may be performed at a temperature of 600°C or higher, 700°C or higher, 750°C or higher, or 800°C or higher, and 900°C or lower, 950°C or lower, 975°C or lower, or 1,000°C or lower. If the heat treatment temperature is within the above range, sufficient thermal energy required for doping may be supplied. If the heat treatment is performed at lower than 600°C, sufficient thermal energy required for doping may not be supplied, and if performed at higher than 1,000°C, there is a problem that the crystal size increases due to over-sintering, resulting in a decrease in the capacity characteristics of the lithium-rich manganese-based oxide.

According to an embodiment of the present invention, the heat treatment may be performed under an air atmosphere. In this case, the sintering atmosphere may be easily maintained and it is advantageous in terms of economy. The heat treatment may be maintained for 6 to 15 hours under a constant temperature. In this case, sufficient thermal energy required for doping may be supplied to prepare a positive electrode active material without impurities and with high crystallinity.

### Positive Electrode

Then, a positive electrode according to present invention will be explained.

The positive electrode according to the present invention includes a positive electrode active material layer including the positive electrode active material according to the present invention. Specifically, the positive electrode includes a positive electrode current collector and a positive electrode active material layer formed on the positive electrode current collector and includes the positive electrode active material. Since the positive electrode active material has been described above, a detailed description thereof will be omitted, and only the remaining components will be explained in detail below.

The positive electrode current collector is not particularly limited as long as it is conductive and does not cause chemical changes in a battery and may use, for example, stainless steel, aluminum, nickel, titanium, fired carbon, or aluminum or stainless steel, surface-treated with carbon, nickel, titanium, silver or the like. In addition, the positive electrode current collector may typically have a thickness of 3 µm to 500 µm, and fine unevenness may be formed on the surface of the current collector to increase the adhesive strength with the positive electrode active material. For example, the positive electrode current collector may be used in various forms such as a film, a sheet, a foil, a net, a porous body, a foam, and a non-woven fabric.

The positive electrode active material layer may include a conductive material and a binder together with the positive electrode active material. In this case, the positive electrode active material may be included in an amount of 80 wt% to 99 wt%, more specifically, 85 wt% to 98.5 wt% on the basis of the total weight of the positive electrode active material layer, and within this range, excellent capacity characteristics may be exhibited.

The conductive material is used to provide the electrode with conductivity, and may be used without specific limitations as long as it does not cause chemical changes in the battery to be formed and has electronic conductivity. Specific examples include: graphite such as natural graphite and artificial graphite; carbon-based materials such as carbon black, acetylene black, Ketjen black, channel black, furnace black, lamp black, thermal black and carbon fiber; metal powders or metal fibers of copper, nickel, aluminum, silver or the like; conductive whiskers of zinc oxide, potassium titanate or the like; conductive metal oxides such as titanium oxide; or conductive polymers such as polyphenylene derivatives, and one of them alone or a mixture of two or more thereof may be used. The conductive material may be included in 0.1 wt% to 15 wt% on the basis of the total weight of the positive electrode active material layer.

The binder serves to improve the adhesion among the positive electrode active material particles and the adhesion between the positive electrode active material and the current collector. Specific examples include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, tetrafluoroethylene, polyethylene, polypropylene, an ethylenepropylene-diene polymer (EPDM), a sulfonated-EPDM, styrene butadiene rubber (SBR), fluoro-rubber, or various copolymers thereof, and one of them alone or a mixture of two or more thereof may be used. The binder may be included in 0.1 wt% to 15 wt% on the basis of the total weight of the positive electrode active material layer.

The positive electrode may be manufactured according to a common method for manufacturing a positive electrode, except that the above positive electrode active material is used. Specifically, the positive electrode may be manufactured by applying a composition for forming a positive electrode active material layer prepared by dissolving or dispersing the positive electrode active material and optionally a binder and a conductive material in a solvent, onto a positive electrode current collector, followed by drying and rolling. In this case, the types and contents of the positive electrode active material, binder, and conductive material are the same as described above. In addition, as another method, the positive electrode may be manufactured by casting the composition for forming a positive electrode active material layer onto a separate support, and then laminating the film thus obtained by peeling it off from the support onto a positive electrode current collector.

The solvent may be a solvent commonly used in the relevant technical field, and may include dimethyl sulfoxide (DMSO), isopropyl alcohol, N-methylpyrrolidone (NMP), acetone, or water. One of them alone or a mixture of two or more thereof may be used. The amount of the solvent used is sufficient to dissolve or disperse the positive electrode active material, conductive material and binder, in consideration of the coating thickness and preparation yield of the slurry, and to have a viscosity that may exhibit excellent thickness uniformity if applied subsequently to manufacture a positive electrode.

### Lithium Secondary Battery

Then, a lithium secondary battery according to the present invention will be explained.

The present invention may manufacture an electrochemical device including the positive electrode. The electrochemical device may be specifically a battery, a capacitor or the like, and more specifically, a lithium secondary battery.

The lithium secondary battery specifically includes a positive electrode, a negative electrode positioned opposite to the positive electrode, and a separator and an electrolyte interposed between the positive electrode and the negative electrode. Since the positive electrode is the same as described above, a detailed description will be omitted, and only the remaining components are particularly explained below.

In addition, the lithium secondary battery may optionally further include a battery container that accommodates an electrode assembly of the positive electrode, negative electrode, and separator, and a sealing member that seals the battery container.

In the lithium secondary battery, the negative electrode includes a negative electrode current collector and a negative electrode active material layer positioned on the negative electrode current collector.

The negative current collector is not particularly limited as long as it has high conductivity without causing chemical changes in the battery, and may use, for example, copper, stainless steel, aluminum, nickel, titanium, fired carbon, copper or stainless steel, surface-treated with carbon, nickel, titanium, silver or the like, an aluminum-cadmium alloy or the like. In addition, the negative current collector may typically have a thickness of 3 µm to 500 µm, and, like the positive current collector, fine unevenness may be formed on the surface of the current collector to reinforce the bonding strength with the negative electrode active material. For example, the negative current collector may be used in various forms such as a film, a sheet, a foil, a net, a porous body, a foam, and a non-woven fabric.

The negative electrode active material layer optionally includes a binder and a conductive material together with the negative electrode active material.

As the negative electrode active material, a compound capable of reversible intercalation and deintercalation of lithium may be used. Specific examples thereof include: carbonaceous materials such as artificial graphite, natural graphite, graphitized carbon fiber and amorphous carbon; metallic compounds capable of alloying with lithium, such as Si, Al, Sn, Pb, Zn, Bi, In, Mg, Ga, Cd, a Si alloy, a Sn alloy and an Al alloy; metallic oxides capable of doping and dedoping lithium, such as SiO_{β} (0<β<2), SnO₂, vanadium oxide, and lithium vanadium oxide; or composites containing the metallic compounds and carbonaceous materials, such as Si-C composites or Sn-C composites, and any one or a mixture of two or more thereof may be used. In addition, a metallic lithium thin film may be used as the negative electrode active material. In addition, both low-crystalline carbon and high-crystalline carbon may be used as the carbon material. Representative examples of the low-crystalline carbon include soft carbon and hard carbon, and representative examples of high-crystalline carbon include amorphous, plate-like, flaky, spherical, fibrous natural graphite or artificial graphite, Kish graphite, pyrolytic carbon, mesophase pitch-based carbon fiber, mesocarbon microbeads, mesophase pitches, and high-temperature fired carbon such as petroleum or coal tar pitch derived cokes.

The negative electrode active material may be included in 80 wt% to 99 wt% on the basis of the total weight of the negative electrode active material layer.

The binder is a component that assists in bonding among the conductive material, the active material, and the current collector, and may be typically added in 0.1 wt% to 10 wt% on the basis of the total weight of the negative electrode active material layer. Examples of such binder include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, an ethylenepropylene-diene polymer (EPDM), a sulfonated-EPDM, styrenebutadiene rubber, nitrile-butadiene rubber, fluoro-rubber, and various copolymers thereof.

The conductive material is a component for further improving the conductivity of the negative electrode active material, and may be added in 10 wt% or less, particularly, 5 wt% or less on the basis of the total weight of the negative electrode active material layer. The conductive material is not particularly limited as long as it has conductivity without causing chemical changes in the battery, and for example, graphite such as natural graphite and artificial graphite; carbon black such as acetylene black, Ketjen black, channel black, furnace black, lamp black and thermal black; conductive fibers such as carbon fiber and metal fiber; fluorinated carbon, metal powders of aluminum, nickel or the like; conductive whiskers of zinc oxide, potassium titanate or the like; conductive metal oxides such as titanium oxide; and conductive materials such as polyphenylene derivatives may be used.

The negative electrode active material layer may be manufactured by applying a composition for forming a negative electrode active material layer, prepared by dissolving or dispersing a negative electrode active material, and optionally a binder and a conductive material in a solvent on a negative electrode current collector, and drying, or by casting the composition for forming a negative electrode active material layer on a separate support, and then laminating the film thus obtained by peeling it off from the support on the negative electrode current collector.

Meanwhile, in the lithium secondary battery, the separator separates the negative electrode and the positive electrode and provides a passage for lithium ions to move, and a separator that is used as a separator in a common lithium secondary battery may be used without any specific limitations, and particularly, a separator that has low resistance to ion movement of the electrolyte and excellent electrolyte impregnation ability may be preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more thereof may be used. In addition, a common porous nonwoven fabric, for example, a nonwoven fabric made of high-melting-point glass fiber, polyethylene terephthalate fiber or the like may be used. In addition, a coated separator containing a ceramic component or a polymer material to secure heat resistance or mechanical strength may be used, and a single-layer or multilayer structure may be optionally used.

In addition, the electrolyte used in the present invention may include, but is not limited thereto, an organic liquid electrolyte, an inorganic liquid electrolyte, a solid polymer electrolyte, a gel-type polymer electrolyte, a solid inorganic electrolyte, and a molten inorganic electrolyte, that may be used for the manufacture of a lithium secondary battery.

Particularly, the electrolyte may include an organic solvent and a lithium salt.

As the organic solvent, any solvent that may act as a medium through which ions involved in the electrochemical reaction of the battery may move, may be used without specific limitation. Specifically, the organic solvent may include: ester solvents such as methyl acetate, ethyl acetate, γ-butyrolactone and ε-caprolactone; ether solvents such as dibutyl ether and tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), ethyl methyl carbonate (EMC), ethylene carbonate (EC) and propylene carbonate (PC); alcohol solvents such as ethyl alcohol and isopropyl alcohol; nitriles such as R-CN (wherein R represents a linear, branched, or cyclic hydrocarbon group having 2 to 20 carbon atoms and may include a double-bonded aromatic ring or an ether bond); amides such as dimethylformamide; dioxolanes such as 1,3-dioxolane; and sulfolanes. Among them, a carbonate solvent is preferable, and a mixture of a cyclic carbonate having high ionic conductivity and high dielectric constant that may improve the charge and discharge performance of a battery (e.g., ethylene carbonate, propylene carbonate or the like) and a linear carbonate compound having low viscosity (e.g., ethyl methyl carbonate, dimethyl carbonate, diethyl carbonate or the like) is more preferable. In this case, if the cyclic carbonate and the chain carbonate are mixed and used in a volume ratio of about 1:1 to about 1:9, the performance of the electrolyte may be exhibited excellent.

The lithium salt may use without any specific limitations as long as it is a compound capable of providing lithium ions used in a lithium secondary battery. Specifically, the lithium salt may use LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like. The concentration of the lithium salt used may be within a range of 0.1 to 5.0 M, particularly, 0.1 to 3.0 M. If the concentration of the lithium salt is within the above range, the electrolyte may have appropriate conductivity and viscosity, and may exhibit excellent electrolyte performance, and lithium ions may move effectively.

In addition to the electrolyte constituent components, the electrolyte may further include one or more additives, for example, haloalkylene carbonate compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, for the purpose of improving the life characteristics of a battery, suppressing the reduction in battery capacity, and improving the discharge capacity of a battery. In this case, the additives may be included in 0.1 to 10 wt%, particularly, 0.1 to 5 wt% on the basis of the total weight of the electrolyte.

Since the lithium secondary battery including the positive electrode active material according to the present invention exhibits excellent life characteristics and capacity characteristics, it is useful in the fields of portable devices such as mobile phones, notebook computers and digital cameras, and electric vehicles such as hybrid electric vehicles (HEVs).

Accordingly, according to another embodiment of the present invention, a battery module including the lithium secondary battery as a unit cell and a battery pack including the same are provided.

The battery module or battery pack may be used as a power source for one or more medium- or large-sized devices including: power tools; electric cars including electric vehicles (EVs), hybrid electric vehicles and plug-in hybrid electric vehicles (PHEVs); or power storage systems.

There is no particular limitation on the external shape of the lithium secondary battery of the present invention, but it may be a cylindrical shape, a prismatic shape, a pouch shape, or a coin shape using a can.

The lithium secondary battery according to the present invention may be used not only as a battery cell used as a power source for small-sized devices, but may also preferably be used as a unit battery in medium- or large-sized battery modules including a plurality of battery cells.

Hereinafter, embodiments will be explained in detail to particularly explain the present invention. However, the embodiments of the present invention can be modified into various other types, and the scope of the present invention should not be interpreted to be limited to the embodiments below.

### MODE FOR CARRYING OUT THE INVENTION

### Examples and Comparative Examples

### Example 1

A mixture of LiOH, Ni_{0.35}Mn_{0.65}(OH)₂ (product name: nickel manganese hydroxide, manufacturer: Huayou, D₅₀: 10 µm) and WO₃ was used so that the molar ratio of Li: (Ni+Mn) :W was 1.30:1:0.001. The mixture was heated at a temperature of 800 to 1,000°C for 10 hours in an air atmosphere to produce a positive electrode active material (lithium-rich manganese-based oxide). In this case, the WO₃ was mixed in an amount of 1,300 ppm with respect to the total weight of the Ni_{0.35}Mn_{0.65}(OH) ₂.

### Example 2

A positive electrode active material (lithium-rich manganese-based oxide) was prepared by performing the same method as in Example 1 above, except for using a mixture of LiOH, Ni_{0.35}Mn_{0.65}(OH)₂ (product name: nickel manganese hydroxide, manufacturer: Huayou, D₅₀: 10 µm) and WO₃ so that the molar ratio of Li:(Ni+Mn):W was 1.30:1:0.003. In this case, the WO₃ was mixed in an amount of 5,200 ppm with respect to the total weight of the Ni_{0.35}Mn_{0.65}(OH)₂.

### Example 3

A positive electrode active material (lithium-rich manganese-based oxide) was prepared by performing the same method as in Example 1 above, except for using a mixture of LiOH, Ni_{0.35}Mn_{0.65}(OH)₂ (product name: nickel manganese hydroxide, manufacturer: Huayou, D₅₀: 10 µm) and WO₃ so that the molar ratio of Li:(Ni+Mn):W was 1.30:1:0.005. In this case, the WO₃ was mixed in an amount of 10,400 ppm with respect to the total weight of the Ni_{0.35}Mn_{0.65}(OH)₂.

### Example 4

A positive electrode active material (lithium-rich manganese-based oxide) was prepared by performing the same method as in Example 1 above, except for using a mixture of LiOH, Ni_{0.35}Mn_{0.65}(OH)₂ (product name: nickel manganese hydroxide, manufacturer: Huayou, D₅₀: 10 µm) and WO₃ so that the molar ratio of Li:(Ni+Mn):W was 1.30:1:0.008. In this case, the WO₃ was mixed in an amount of 15,600 ppm with respect to the total weight of the Ni_{0.35}Mn_{0.65}(OH)₂.

### Example 5

A positive electrode active material (lithium-rich manganese-based oxide) was prepared by performing the same method as in Example 1 above, except for using a mixture of LiOH, Ni_{0.35}Mn_{0.65}(OH)₂ (product name: nickel manganese hydroxide, manufacturer: Huayou, D₅₀: 3 µm) and WO₃ so that the molar ratio of Li:(Ni+Mn):W was 1.30:1:0.005. In this case, the WO₃ was mixed in an amount of 10,400 ppm with respect to the total weight of the Ni_{0.35}Mn_{0.65}(OH)₂.

### Comparative Example 1

A positive electrode active material (lithium-rich manganese-based oxide) was prepared by performing the same method as in Example 1 above, except for using a mixture of LiOH, and Ni_{0.35}Mn_{0.65}(OH)₂ (product name: nickel manganese hydroxide, manufacturer: Huayou, D₅₀: 10 µm) so that the molar ratio of Li:(Ni+Mn) was 1.30:1.

### Comparative Example 2

A positive electrode active material (lithium-rich manganese-based oxide) was prepared by performing the same method as in Example 1 above, except for using a mixture of LiOH, Ni_{0.35}Mn_{0.65}(OH)₂ (product name: nickel manganese hydroxide, manufacturer: Huayou, D₅₀: 10 µm) and WO₃ so that the molar ratio of Li:(Ni+Mn):W was 1.30:1:0.009. In this case, the WO₃ was mixed in an amount of 18,200 ppm with respect to the total weight of the Ni_{0.35}Mn_{0.65}(OH)₂.

### Comparative Example 3

A positive electrode active material (lithium-rich manganese-based oxide) was prepared by performing the same method as in Example 1 above, except for using a mixture of LiOH, Ni_{0.35}Mn_{0.65}(OH)₂ (product name: nickel manganese hydroxide, manufacturer: Huayou, D₅₀: 10 µm), Co(OH)₂ and WO₃ so that the molar ratio of Li:(Ni+Mn):Co:W was 1.30:1:0.05:0.005. In this case, the WO₃ was mixed in an amount of 10,400 ppm with respect to the total weight of the Ni_{0.35}Mn_{0.65}(OH)₂.

### Comparative Example 4

A positive electrode active material (lithium-rich manganese-based oxide) was prepared by performing the same method as in Example 1 above, except for using a mixture of LiOH, Ni_{0.35}Mn_{0.65}(OH)₂ (product name: nickel manganese hydroxide, manufacturer: Huayou, D₅₀: 10 µm), Co(OH)₂ and WO₃ so that the molar ratio of Li:(Ni+Mn):Co:W was 1.30:1:0.05:0.009. In this case, the WO₃ was mixed in an amount of 18,200 ppm with respect to the total weight of the Ni_{0.35}Mn_{0.65}(OH)₂.

### Experimental Examples

### Experimental Example 1: XRD Analysis

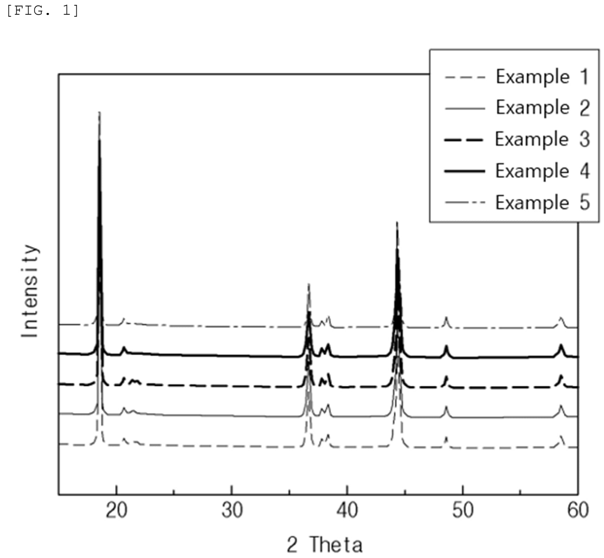

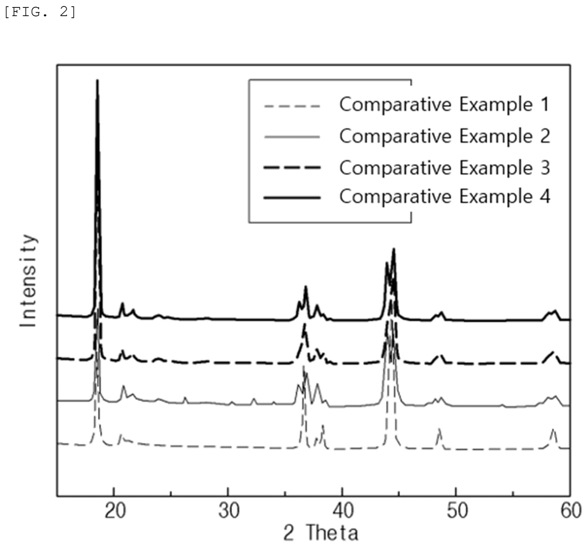

For each of the positive electrode active materials prepared in Examples 1 to 5 above, after XRD measurement, the XRD data are shown in FIG. 1. In addition, for each of the positive electrode active materials prepared in Comparative Examples 1 to 4 above, after XRD measurement, the XRD data are shown in FIG. 2.

In this case, the XRD was measured by collecting 2 g to 3 g of positive electrode active material particles from each positive electrode active material powder, and using Cu-Kα rays (wavelength 1.54 Å) at an acceleration voltage of 40 kV/40 mA, at a scan speed of 0.2°/sec, in a 2θ range of 15° to 80° using an X-ray diffraction analysis method.

Through FIG. 1, it was confirmed that the positive electrode active materials prepared in Examples 1 to 5 simultaneously included two phases. Specifically, it was confirmed that a Li₂MnO₃ phase was included as a small peak existing at 20° to 25°, and a LiMO₂ (where M is an element including Ni, Mn or a combination thereof) phase was simultaneously included as a large peak existing at 18°.

Through FIG. 2, in the case of the positive electrode active material prepared in Comparative Example 1 where W was not doped, it was confirmed that it had the same peaks as in the Examples at 20° to 25°, and 18°, and thus simultaneously included a Li₂MnO₃ phase and a LiMO₂ (where M is an element including Ni, Mn or a combination thereof) phase. On the other hand, in the case of the positive electrode active material prepared in Comparative Example 2 where W was doped in excess, additional peaks expected to be impurities were confirmed at 20° to 40°, and it was confirmed that the peak pattern was different compared to the Examples. In the case of the positive electrode active material prepared in Comparative Example 3 where Co was additionally doped, separate peaks were confirmed at around 23°, 38°, 45°, and 58° compared to the Examples and Comparative Example 1, and it was confirmed that the peak pattern was different overall. In the case of Comparative Example 4 where Co was additionally doped and W was excessively doped, it was confirmed that the peak pattern was similar to that of Comparative Example 3 at 20° to 35°, and that the peak pattern was similar to that of Comparative Example 2 at 35° to 60°.

In conclusion, it was confirmed that the positive electrode active material according to the present invention simultaneously includes a Li₂MnO₃ phase and a LiMO₂ (where M is an element including Ni, Mn or a combination thereof) phase, and if W is doped in excess (Comparative Example 2) or Co is additionally doped (Comparative Examples 3 and 4), it was confirmed that a different crystal structure from the positive electrode active material according to the present invention is shown due to the excess W and/or Co.

### Experimental Example 2: ICP Analysis

Each of the positive electrode active materials prepared in Examples 1 to 5 and Comparative Examples 1 to 4 was taken in an amount of 0.1 g, 1 ml of hydrochloric acid was added, and the solution was heated to dissolve the positive electrode active material. Thereafter, a small amount of hydrogen peroxide was added to promote the reaction and completely dissolve the positive electrode active material to prepare a solution. Then, the solution was diluted with deionized water to a total volume of 10 ml to prepare an analysis sample. Using an ICP device (Perkin Elmer Co., OPTIMA 7300DV), the weight ratio of the constituent elements present in the analysis sample was measured, and the composition of the positive electrode active material, the content of W (ppm) and the content of Co (ppm) relative to the total weight of the lithium-rich manganese-based oxide are shown in Table 1 below.

**[Table 1]**

| Division | Positive electrode active material composition | W content (ppm) | Co content (ppm) |
|---|---|---|---|
| Example 1 | Li_{1.145}Ni_{0. 306}Mn_{0.567}W_{0.001}O₂ | 1,101 | - |
| Example 2 | Li_{1.140}Ni_{0.307}Mn_{0.569}W_{0.002}O₂ | 4,348 | - |
| Example 3 | Li_{1.150}Ni_{0.304}Mn_{0.562}W_{0.004}O₂ | 8,616 | - |
| Example 4 | Li_{1.145}Ni_{0.305}Mn_{0.563}W_{0.006}O₂ | 13,010 | - |
| Example 5 | Li_{1.150}Ni_{0.313}Mn_{0.553}W_{0.004}O₂ | 8,810 | - |
| Comparative Example 1 | Li_{1.140}Ni_{0.316}Mn_{0.561}O₂ | - | - |
| Comparative Example 2 | Li_{1.140}Ni_{0.315}Mn_{0.553}W_{0.008}O₂ | 17,800 | - |
| Comparative Example 3 | Li_{1.140}Ni_{0.304}Co_{0.035}Mn_{0.531}W_{0.004} O₂ | 8,420 | 22,760 |
| Comparative Example 4 | Li_{1.140}Ni_{0.302}Co_{0.037}Mn_{0.530}W_{0.008} O₂ | 16,430 | 24, 140 |

Through Table 1, it was confirmed that the content of W in each of the positive electrode active materials prepared in Examples 1 to 5 was 1,101 ppm to 13,010 ppm with respect to the total weight of the lithium-rich manganese-based oxide.

### Experimental Example 3: Tap Density and Average Particle Diameter Measurement

Using a tap density meter (e.g., GEOPYC-1360 from Micromeritics), each of 10 g of the positive electrode active materials prepared in Examples 1 to 5 above was charged into a container of about 20 cm³, pressurized to 108 N, and measured twice for particle density, and then the average of the measured values was calculated to measure the tap density, and the results are shown in Table 2 below.

In order to measure the average particle diameter of each of the positive electrode active materials prepared in Examples 1 to 5 above, the particle size of the positive electrode active material was measured using PSA (Microtrac Co., S3500), and the results are shown in Table 2 below.

**[Table 2]**

| Division | Tap density (g/cm³) | Average particle diameter (D₅₀) (µm) |
|---|---|---|
| Example 1 | 2.18 | 9.59 |
| Example 2 | 2.18 | 9.53 |
| Example 3 | 2.20 | 9.57 |
| Example 4 | 2.18 | 9.53 |
| Example 5 | 2.17 | 3.82 |

Through Table 2, it was confirmed that each of the positive electrode active materials prepared in Examples 1 to 5 had a tap density of 2.17 g/cm³ to 2.20 g/cm³ and an average particle size (D₅₀) of 3.82 µm to 9.59 µm.

### Experimental Example 4: Form Analysis

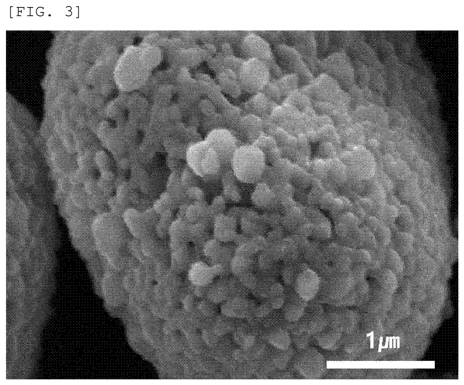

For the positive electrode active material prepared in Example 1, an SEM image was obtained using a scanning electron microscope (SEM), and the image is shown in FIG. 3.

Through FIG. 3, it was confirmed that the positive electrode active material prepared in Example 1 was in the form of a secondary particle formed by agglomeration of multiple primary particles.

### Experimental Example 5: Battery Properties Evaluation

### Coin-type Half Cell Fabrication

92.5 wt% of each of the positive electrode active materials prepared in Examples 1 to 5 and Comparative Examples 1 to 4, 3.0 wt% of Super P as a conductive material, and 4.5 wt% of polyvinylidene fluoride (PVDF) as a binder were mixed in an N-methylpyrrolidone (NMP) solvent to prepare a positive electrode slurry. The prepared positive electrode slurry was applied to one surface of an aluminum current collector, dried at 130°C, and then rolled to prepare a positive electrode.

An electrode assembly was manufactured by using a lithium metal electrode as a negative electrode and interposing a porous polyethylene separator between the positive and negative electrodes. This was placed inside a battery case and an electrolyte solution containing 1 M LiPF₆ dissolved in an organic solvent obtained by mixing ethylene carbonate (EC): ethyl methyl carbonate (EMC) in a volume ratio of 3:7, was injected to manufacture a coin-type half cell.

### Battery Capacity Properties Evaluation

A coin-type half cell including each of the positive electrode active materials prepared in Examples 1 to 5 and Comparative Examples 1 to 4 was charged (0.1 C) in the CC-CV manner at 45°C to 4.65 V, and then discharged (0.1 C) in the CC manner to 2.0 V to perform an activation process (formation), and the charge and discharge capacities at this time were measured. The measured charge and discharge capacities and the percentage of discharge capacity to charge capacity (efficiency (%)) are shown in Table 3 below.

Then, the initial charge and discharge processes were performed by charging (0.1 C) to 4.4 V at 25°C in the CC-CV manner, and then discharging (0.1 C) to 2.5 V in the CC manner, and the charge and discharge capacities at this time were measured. The measured charge and discharge capacities and the percentage of discharge capacity to charge capacity (efficiency (%)) are shown in Table 3 below.

After charging (0.33 C) to 4.4 V at 25°C in the CC-CV manner, the initial charge and discharge processes were performed by discharging (0.33 C) to 2.5 V in the CC manner, and the charge and discharge capacities at this time were measured. The measured charge and discharge capacities and the percentage of discharge capacity to charge capacity (efficiency (%)) are shown in Table 3 below.

**[Table 3]**

| Division | Activation process @45°C | | | First cycle charge and discharge @ 0.1 C | | | First cycle charge and discharge @ 0.33 C | | | 0.33 C/0.1C (%) |
|---|---|---|---|---|---|---|---|---|---|---|
| | Charge capacity (mAh/g) | Discharge capacity (mAh/g) | Efficiency (%) | Charge capacity (mAh/g) | Discharge capacity (mAh/g) | Efficiency (%) | Charge capacity (mAh/g) | Discharge capacity (mAh/g) | Efficiency (%) | |
| Example 1 | 294.5 | 272.1 | 92.4 | 223.3 | 211.3 | 94.6 | 210.1 | 197.1 | 93.8 | 93.3 |
| Example 2 | 291.7 | 270.5 | 92.7 | 221.9 | 211.1 | 95.1 | 209.7 | 197.9 | 94.3 | 93.7 |
| Example 3 | 291.3 | 271.0 | 93.0 | 221.6 | 211.7 | 95.5 | 210.0 | 199.9 | 95.2 | 94.4 |
| Example 4 | 290.4 | 263.5 | 90.7 | 213.0 | 205.1 | 96.3 | 202.9 | 195.3 | 96.3 | 95.2 |
| Example 5 | 299.1 | 274.9 | 92.0 | 226.7 | 213.9 | 94.3 | 212.1 | 199.9 | 94.3 | 93.5 |
| Comparative Example 1 | 295.9 | 272.9 | 92.2 | 227.6 | 212.4 | 93.3 | 211.1 | 194.4 | 92.1 | 91.5 |
| Comparative Example 2 | 230.6 | 177.5 | 77.0 | 130.4 | 116.2 | 89.1 | 115.6 | 90.8 | 78.5 | 78.1 |
| Comparative Example 3 | 271.5 | 234.3 | 86.3 | 190.0 | 181.8 | 95.7 | 179.3 | 165.5 | 92.3 | 91.0 |
| Comparative Example 4 | 260.6 | 205.4 | 78.8 | 159.0 | 147.1 | 92.5 | 144.6 | 125.0 | 86.4 | 85.0 |

Through Table 3, it was confirmed that, compared to the battery including the positive electrode active material prepared in Comparative Example 1 in which W was not doped, the batteries including the positive electrode active materials prepared in the Examples maintained similar levels of activation process, charge and discharge capacities at 0.1 C and 0.33 C, and improved efficiency and rate characteristics. Compared to the battery including the positive electrode active material prepared in Comparative Example 2 in which W was excessively doped, the batteries including the positive electrode active materials prepared in the Examples had excellent activation process, charge and discharge capacities at 0.1 C and 0.33 C, and excellent efficiency and rate characteristics. Compared to the batteries including the positive electrode active materials prepared in Comparative Examples 3 and 4 in which Co was additionally doped, the batteries including the positive electrode active materials prepared in the Examples had excellent activation process, charge and discharge capacities at 0.1 C and 0.33 C, and efficiency of the activation process, and improved efficiency and rate characteristics at 0.1 C and 0.33 C.

In conclusion, it can be found that the positive electrode active material according to the present invention effectively increases the activation degree of Mn, so that irreversible capacity loss is small during the activation process, and is stable with little structural change during charge and discharge cycles.

## Claims

1. A positive electrode active material comprising a lithium-rich manganese-based oxide comprising a Li₂MnO₃ phase and a LiMO₂ (where M is an element comprising Ni, Mn or a combination thereof) phase at the same time,
wherein the lithium-rich manganese-based oxide has a composition represented by the following Formula 1:
[Formula 1] Li₁₊ₓNiₐMn_{b}W_{c}M¹_{d}O₂
in Formula 1,
M¹ is one or more selected from Al, P, V, Y, Ti and Nb,
0.10≤x≤0.20, 0<a<0.5, 0.5≤b<1.0, 0<c<0.008, and 0≤d<0.005.

2. The positive electrode active material according to claim 1, wherein a is 0.30 to 0.35.

3. The positive electrode active material according to claim 1, wherein b is 0.55 to 0.60.

4. The positive electrode active material according to claim 1, wherein c is 0.0005 to 0.007.

5. The positive electrode active material according to claim 1, wherein the content of W is 800 ppm to 15,000 ppm on the basis of a total weight of the lithium-rich manganese-based oxide.

6. The positive electrode active material according to claim 1, wherein the lithium-rich manganese-based oxide has a tap density of 1.5 g/cm³ to 2.5 g/cm³.

7. The positive electrode active material according to claim 1, wherein the lithium-rich manganese-based oxide has an average particle diameter (D₅₀) of 2 µm to 12 µm.

8. A method for preparing the positive electrode active material according to claim 1, the method comprising:
(A) a step of mixing a composite transition metal hydroxide, a lithium (Li)-containing raw material, and a tungsten (W)-containing raw material to prepare a mixture; and
(B) a step of heat-treating the mixture to prepare a lithium-rich manganese-based oxide,
wherein the heat-treating is performed under a temperature of 600°C to 1,000°C.

9. The method for preparing the positive electrode active material according to claim 8, wherein the tungsten (W)-containing raw material is mixed in an amount of 1,000 ppm to 17,000 ppm on the basis of a total weight of the composite transition metal hydroxide.

10. The method for preparing the positive electrode active material according to claim 8, wherein the heat-treating in step (B) is performed under an air atmosphere.

11. A positive electrode comprising the positive electrode active material according to any one of claim 1 to claim 7.

12. A lithium secondary battery comprising the positive electrode according to claim 11.
